# FASCICULE DE BREVET EUROPEEN

(11) **EP 1 974 134 B1**
(45) Date de publication et mention de la délivrance du brevet: **11.01.2012**
(21) Numéro de dépôt: 07718163.4
(22) Date de dépôt: 18.01.2007
(51) Int. Cl.: F01P 7/16, G05D 23/275

(54) **PROCEDE ET DISPOSITIF DE REGULATION DE LA TEMPERATURE D'UN MOTEUR A COMBUSTION INTERNE**
VERFAHREN UND VORRICHTUNG ZUR TEMPERATURREGELUNG EINES VERBRENNUNGSMOTORS
METHOD AND DEVICE FOR REGULATING THE TEMPERATURE OF AN INTERNAL COMBUSTION ENGINE

(30) Priorité: 19.01.2006 FR 0600485
(43) Date de publication de la demande: 01.10.2008
(73) Titulaire: Renault SAS, 92100 Boulogne Billancourt (FR)
(72) Inventeur: MOUNETOU, Christophe, F-92240 Malakoff (FR); PINTEAU, Franck, F-92160 Antony (FR); PREMIER, Emmanuel, F-91590 Cerny (FR); REY, Pascal, F-91540 Mennecy (FR)
(86) Numéro de dépôt international: PCT/FR2007/050663
(87) Numéro de publication internationale: WO 2007/083065

(56) Documents cités:
- EP-A- 0 744 538
- EP-A- 1 279 801
- WO-A-2005/017327
- DE-A- 10 318 355
- US-A1- 2003 116 103
- US-A1- 2004 144 340

## Description

La présente invention se rapporte au domaine du contrôle moteur, et plus particulièrement à un procédé et un dispositif de régulation de la température d'un moteur à combustion interne par contrôle de l'ouverture d'un système de vannage du circuit de refroidissement (ex : thermostat).

Le contrôle moteur est la technique de gestion d'un moteur à combustion interne avec l'ensemble de ses capteurs, actionneurs et liaisons inter systèmes (LIS). L'ensemble des lois de contrôle commande (stratégies logicielles) et des paramètres de caractérisation (calibrations) d'un moteur étant contenu dans un calculateur appelé unité de contrôle électronique (UCE).

Les moteurs à combustion interne (à carburateur ou à injection de combustible), nécessitent un refroidissement qui est généralement obtenu par une circulation d'eau ou d'air. En effet, un moteur thermique dégage de la chaleur. Cette chaleur est due à la combustion des gaz et aux différents frottements des pièces en mouvement.

Afin de contenir les dilatations dans des zones de températures admissibles et conserver à l'huile de lubrification ses caractéristiques, il faut donc refroidir. Le refroidissement est réalisé au moyen des 3 fluides présents dans l'environnement:
- L'air est essentiellement utilisé pour les échangeurs (radiateur, échangeurs air - air), ainsi que pour le refroidissement naturel des calories présentés par conduction sur les faces externes du moteur et de l'échappement.
- L'eau refroidit les cylindres et la culasse.
- L'huile quant à elle évacue les calories au niveau des pistons, l'arbre à cames, les têtes de bielles, les paliers de vilebrequin, les soupapes.

Lorsqu'on utilise une circulation d'eau, celle-ci est généralement en circuit fermé et refroidie dans un radiateur lui-même refroidi par de l'air dont la circulation peut être aidée par un ventilateur. La chaleur à évacuer étant fonction du régime et de la charge du moteur à combustion interne et la température de celui-ci devant se situer dans une fourchette relativement étroite pour obtenir le rendement optimum, le système de refroidissement doit être régulé. Pour cela il est nécessaire de déterminer une température de régulation avec une consigne fixe pour assurer une température de fonctionnement optimale pour le moteur.

Un objectif de cette régulation est la diminution de la consommation et donc une diminution quantitative de polluants.

En effet, à basse température, l'huile de lubrification du moteur thermique a une viscosité élevée ce qui entraîne des frottements supplémentaires dans le moteur et par conséquent une surconsommation de carburant. Celle-ci intervient notamment au démarrage du véhicule lorsque le moteur thermique et l'huile sont froids.

La production d'oxydes d'azote (NOX), elle, est liée notamment à la température du mélange de gaz introduit dans les cylindres du moteur thermique du véhicule. Plus la température du mélange est élevée, plus la production d'oxydes d'azote est importante.

Ainsi par l'augmentation de la température d'eau de refroidissement moteur, on augmente de ce fait la température d'huile et réduit alors les pertes par frottement, alors qu'une température plus basse va limiter la production notamment d'oxyde d'azote. Il est donc important que le moteur soit maintenu à une température optimale par le contrôle du circuit de refroidissement. Ainsi, la majorité des véhicules aujourd'hui est équipée d'un thermostat classique qui fonctionne sur le principe de la' dilatation d'un volume de cire. Ce thermostat peut être placé en sortie ou en entrée moteur. Sous l'effet de la température d'eau, une capsule de cire commande, par sa dilatation thermique calibrée sur un point de température, l'ouverture d'un ou deux clapets par l'intermédiaire d'un piston de travail. Le ou les 2 clapets vont s'ouvrir ou se fermer ou réguler la circulation de liquide de refroidissement, et éventuellement d'un circuit de dérivation.

Ainsi, suivant la phase de fonctionnement du moteur (accélération, décélération..) il est nécessaire de réguler la température soit en augmentant la consigne de température soit en la diminuant. Actuellement, la variation de température se fait avec un profil de consigne de température en palier. C'est à dire que lorsque l'on veut faire passer la température de par exemple 90°C à 110°C ou de 110°C à 90°C, la consigne varie brusquement de 90°C à 110°C ou de 110°C à 90°C sans étape intermédiaire. L'ouverture du système de vannage n'est donc pas progressive.

Ainsi, à chaque changement de consigne de température, avant que la vanne s'ouvre, l'écart de température de part et d'autre du thermostat s'amplifie au fur et mesure de la montée en température du moteur. Lorsque la vanne s'ouvre il va donc se produire un choc thermique.

Ce choc thermique va avoir des effets négatifs sur les composants annexes environnants au moteur et, notamment les systèmes de refroidissement du moteur lui-même et autres systèmes de refroidissement (aérotherme habitacle, échangeurs EGR, échangeurs eau/huile, radiateur de climatisation et son condenseur, refroidisseur d'air de suralimentation, radiateur de BVA,...) qui sont sensibles aux changements ou passages d'une température à une autre consigne de température de fonctionnement du moteur. De la même façon la position des divers éléments les uns par rapport aux autres a une influence sur la qualité de régulation de température et les contraintes associées. Par exemple, si le système de vannage du circuit de refroidissement se trouve en entrée ou en sortie moteur.

Ces contraintes supplémentaires consistent en des déformations des composants annexes au moteur engendrés par les variations de température et se traduisent en efforts mécaniques supplémentaires.

Le brevet US 2002/0053325 propose une solution pour limiter les chocs thermiques avec un dispositif pour réguler la température du moteur en contrôlant la circulation du liquide de refroidissement entre le moteur et un échangeur de chaleur tel qu'un radiateur. Ce dispositif comporte un premier thermostat classique tel que décrit précédemment dont la température d'activation se situe aux alentours de 102°C et un thermostat comportant une résistance en son centre et dont la température d'activation est supérieure de 25°C à celle du premier thermostat, et se situe donc aux alentours de 127°C. Ces deux thermostats contrôlent chacun une ouverture différente d'une valve permettant au liquide de refroidissement d'arriver dans le radiateur afin d'être refroidi. Ainsi lorsque la température du liquide de refroidissement atteint la première température d'activation, la matière expansible contenue dans le premier thermostat va activer un piston qui va lui-même ouvrir une valve permettant ainsi au liquide de refroidissement de circuler via le radiateur avec un certain débit. Si la température du liquide est plus élevée et se situe aux alentours de 127 °C la matière expansible contenue dans le deuxième thermostat va activer un deuxième piston qui va permettre une ouverture plus grande de la valve. Le liquide va ainsi circuler avec un plus grand débit vers le radiateur, ainsi dans un même intervalle de temps une plus grande quantité de liquide va être refroidie. Ce dispositif permet donc d'éviter que le moteur ne reste trop longtemps à une température trop élevée.

Un inconvénient toutefois de ce dispositif est qu'il n'agit qu'une fois que la température du moteur est supérieure à une température idéale de fonctionnement qui se situe aux alentours de 90°C. Il ne permet donc pas d'éviter totalement les chocs thermiques et ne traite pas les changements de consigne de température. Les différentes pièces du moteur concernées par cette surchauffe vont donc subir les contraintes et déformations énoncées plus haut.

La présente invention a donc pour objet de réduire ces inconvénients par un pilotage adapté du système de vannage (ici un thermostat) qui permet de réduire l'amplitude du choc thermique sur les composants en effectuant une commande selon un critère choisi par rapport à la température du liquide de refroidissement et en surveillant l'ouverture effective du système de vannage, toujours par rapport à la température.

Dans ce but, l'invention propose un dispositif de régulation de la température moteur, le dispositif comportant un système de vannage disposé sur une conduite d'un circuit de refroidissement d'un moteur à combustion interne reliant le moteur à un radiateur, la conduite comportant un capteur de température disposé en sortie du moteur et en amont du système de vannage dont l'ouverture est activée automatiquement sous l'effet d'un réchauffement du liquide de refroidissement à une température consigne caractérisé en ce qu'il comporte des moyens permettant de faire varier la température consigne selon un profil de consigne déterminé, compris entre une valeur consigne de température mémorisée minimum et une valeur consigne de température mémorisée maximum, afin que la température du moteur atteigne progressivement la valeur de consigne minimum ou maximum pour atténuer le choc thermique par le maintient d'une ouverture plus ou moins grande du système de vannage, et des moyens de contrôle de première ouverture du système de vannage permettant de contrôler que la première ouverture du système de vannage a déjà eu lieu

Selon une autre caractéristique de l'invention les moyens permettant de commander une ouverture plus ou moins grande du système de vannage suivant le profil de consigne déterminé sont constitués d'une résistance chauffante utilisée pour augmenter ou diminuer prématurément la température d'une capsule de cire du système de vannage, provoquant respectivement l'ouverture ou la fermeture d'un clapet et sont contrôlés par des moyens de calcul disposés dans le calculateur.

Selon une autre caractéristique de l'invention les moyens de calcul disposés dans le calculateur sont constitués par au moins un premier module de calcul permettant de déterminer des températures bornes minimum et maximum inférieures en fonction réciproquement des températures consignes minimum et maximum mémorisées dans des moyens de mémorisation situés dans le calculateur, un deuxième module de calcul permettant de calculer plusieurs températures intermédiaires du profil de consigne entre la température borne minimum et la température borne maximum, un module de comparaison permettant de comparer la température mesurée en continu en sortie du moteur par le capteur de température pendant le roulage avec les températures intermédiaires calculées avec le deuxième module de calcul afin de déterminer l'écart entre les deux températures et un module de correction de l'écart permettant de définir l'ouverture nécessaire du thermostat pour atteindre la température consigne désirée en fonction de l'écart mesuré.

Selon une autre caractéristique de l'invention les moyens de calcul disposés dans le calculateur comprennent un module de commande du thermostat en relation avec le module de correction

Un autre but de l'invention est de proposer un procédé de régulation de la température moteur mettant en oeuvre le dispositif selon la revendication 1 caractérisé en ce qu'il consiste à faire varier la température consigne afin que la température du moteur atteigne progressivement une valeur maximum de température lorsque la première ouverture du système de vannage a déjà eu lieu.

Selon une autre caractéristique de l'invention le procédé comporte les étapes suivantes :
- détermination d'une valeur de température consigne minimum et d'une température consigne maximum et mémorisation de ces deux températures consignes dans des moyens de mémorisation d'un calculateur,
- détermination par un premier module de calcul d'une valeur de température borne minimum à partir de la température consigne minimum et d'une valeur de température borne maximum à partir de la température consigne maximum et mémorisation de ces deux températures consignes dans des moyens de mémorisation d'un calculateur,
- détermination par un deuxième module de calcul de températures intermédiaires en fonction des températures bornes minimum et maximum,
- mesure en continu pendant tout le temps de roulage de la température du liquide de refroidissement contenue dans le circuit en sortie du moteur et en aval du système de vannage avec un capteur,
- comparaison de la température en sortie moteur avec les différentes températures intermédiaires afin de déterminer un écart,
- correction de l'écart de température par ouverture ou fermeture du système de vannage.

Selon une autre caractéristique de l'invention la valeur de la température consigne minimum est comprise entre 80°C et 85°C et la température consigne maximum est comprise entre 100°C et 120°C.

Selon une autre caractéristique de l'invention la température consigne minimum est égale à 90°C et la température consigne maximum est égale à 110°C.

Selon une autre caractéristique de l'invention la température borne minimum est égale à 92°C lorsque la température consigne minimum est égale à 90°C et la température borne maximum est égale à 108°C lorsque la température consigne maximum est égale à 110°C.

Selon une autre caractéristique de l'invention l'ouverture et la fermeture du système de vannage sont réalisées en commandant la mise en marche d'un moyen de chauffage situé au niveau du système de vannage qui va faire atteindre précocement la température consigne permettant l'ouverture ou la fermeture du système de vannage.

L'invention, avec ses caractéristiques et avantages, ressortira plus clairement à la lecture de la description faite en référence aux dessins annexés donnés à titre d'exemples non limitatifs dans lesquels :
- la figure 1 est une représentation schématique de l'évolution de la température en fonction du temps pour une régulation de température standard,
- la figure 2 est une représentation schématique de l'évolution de la température en fonction du temps pour une régulation progressive avec augmentation de la consigne selon l'invention,
- la figure 3 est une représentation schématique de l'évolution de la température en fonction du temps pour une régulation progressive avec diminution de la consigne selon l'invention,
- la figure 4 est une représentation schématique du dispositif selon l'invention,
- la figure 5 est une représentation schématique du procédé selon l'invention.

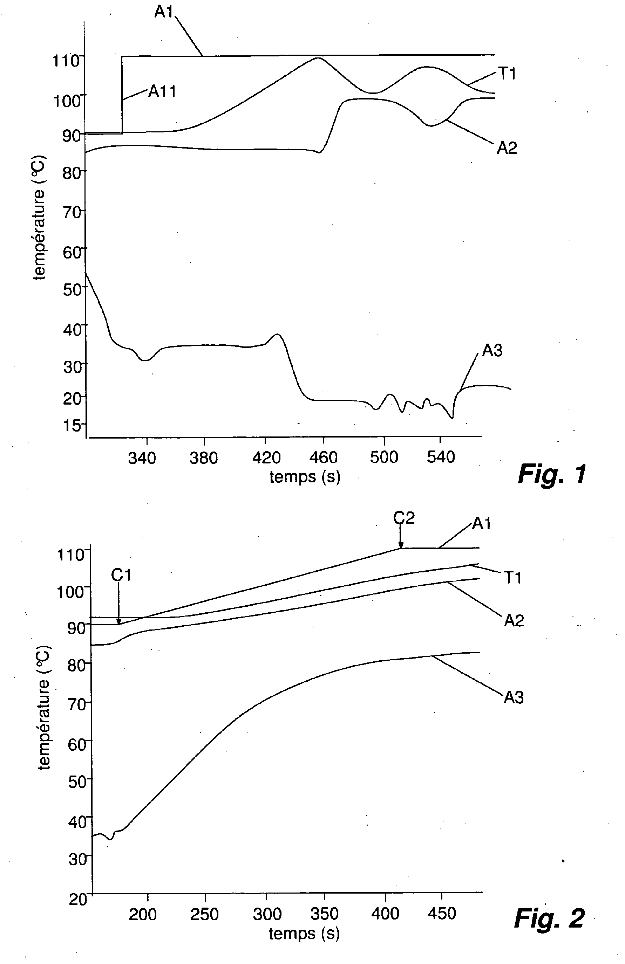

La figure 1 illustre une régulation de la température moteur classique. Dans ce type d'ouverture le dispositif permettant l'ouverture du système de vannage comprend un thermostat classique, tel que présenté précédemment, dont le liquide expansible permet l'ouverture d'un clapet à une température donnée. Sur le graphe présenté sur la figure 1 la courbe A1 représente la consigne de température et la courbe T1 la température du liquide de refroidissement, c'est-à-dire la température du moteur. Dans l'exemple présenté ici la consigne passe brusquement de 90°C à 110°C en formant un palier ou un échelon (A11). On observe que la température du liquide de refroidissement ne suit pas immédiatement cette consigne et effectue quelques battements avant de converger vers une température de régulation du thermostat. Ces battements s'expliquent par la variation brutale de la température en entrée radiateur (courbe A2) et en sortie radiateur (courbe A3). Lorsque le débit de liquide de refroidissement s'établit, celui-ci se fait aussi de manière brutale comme la consigne, entraînant une fatigue importante du système de refroidissement.

Ces variations de température brusques sur ce mode de fonctionnement entraînent des efforts sur le radiateur et accentuent son vieillissement

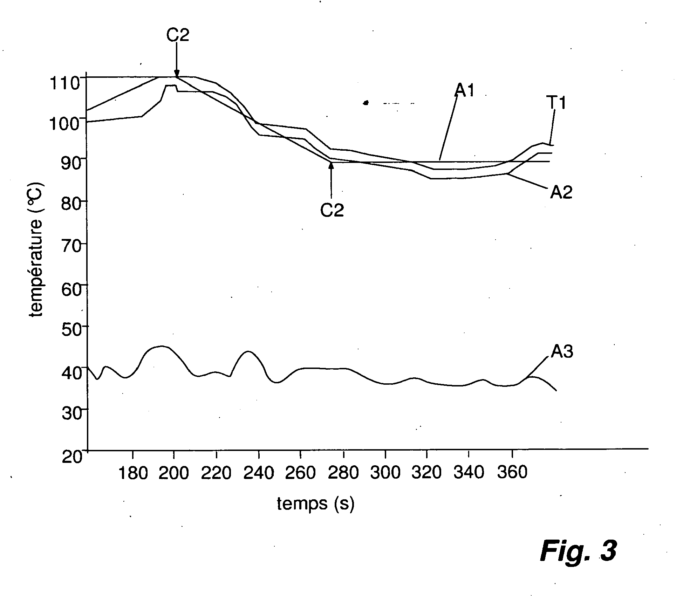

Les figures 2 et 3 illustrent une régulation de la température moteur mais cette fois ci contrôlée avec le procédé et le dispositif selon l'invention.

La figure 2 illustre un profil de changement de consigne (courbe A1) de température allant d'une température basse (C1) de 90°C vers une température haute (C2) de 110°C. La température moteur (courbe T1) monte de la même façon que la consigne (plus lentement) et sans aucun battement de température. Pour la température d'entrée radiateur (courbe A2), le même profil en forme de rampe de température est visible, et les contraintes sur le radiateur sont d'autant atténuées. Dans ce cas la température de consigne est atteinte par une fermeture progressive du système de vannage, la résistance chauffe de moins en moins. Ce qui explique que la température en entrée radiateur continue à augmenter. En effet, le fait de fermer progressivement le système de vannage provoque un réchauffement du liquide de refroidissement, et le peu de liquide qui continue à passer dans le radiateur est de plus en plus chaud d'où l'augmentation de température observée sur la courbe A2

La figure 3 illustre un profil de changement de consigne (courbe A1) de température allant d'une température haute (C2) vers une température basse (C1). La résistance chauffe de plus en plus. La température de refroidissement moteur et entrée radiateur, suivent aussi cette rampe, mais de façon plus chaotique et on observe la présence de mini paliers de température, du fait des évolutions de fonctionnement du moteur (variation du régime et de la charge du moteur).

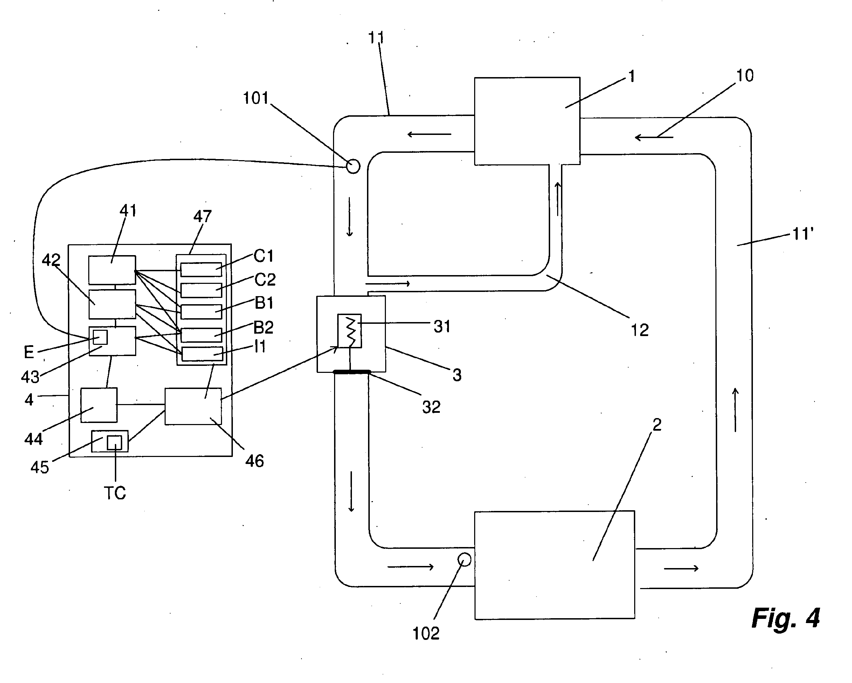

La figure 4 illustre un mode de réalisation du dispositif selon invention permettant d'obtenir les résultats présentés sur les figures 2 et 3. Ce dispositif comprend un moteur (1) à combustion interne et un radiateur (2) reliés entre eux par une conduite (11, 11') servant à la circulation (10) du liquide de refroidissement, de façon à former un circuit en boucle. Ce circuit permet au liquide de refroidissement de circuler du moteur (1) vers le radiateur (2) puis de repartir du radiateur vers le moteur par un chemin différent (11'). Une deuxième conduite forme une dérivation (12) permettant au liquide refroidissement de revenir directement au moteur (1) sans passer par le radiateur (2). Sur le trajet de la première conduite (11) entre le moteur (1) et le radiateur (2), et après la dérivation (12), est disposé un système de vannage (3) de type thermostat. Ce système de vannage (3) représenté sous la forme d'un boitier comporte un passage (non représenté) pour le liquide de refroidissement entre le moteur (1) et le radiateur (2) obturable par une vanne, et un élément de commande thermostatique de cette vanne. Cet élément de commande thermostatique n'autorise la circulation du liquide de refroidissement du moteur (1) en direction du radiateur (2) que lorsque celui-ci a atteint une certaine température.

L'élément de commande thermostatique est du même type que celui décrit précédemment. Il fonctionne sur le principe de la dilatation d'un volume de cire compris dans une capsule. Sous l'effet de la température du liquide de refroidissement, la capsule de cire commande, par sa dilatation thermique calibrée sur un point de température, l'ouverture d'un clapet (32) par l'intermédiaire d'un piston de travail. Le clapet (32) va ainsi s'ouvrir ou se fermer pour réguler la circulation de liquide de refroidissement, et éventuellement du circuit de dérivation (12). Dans le cadre de l'invention le thermostat (3) utilisé s'ouvre lorsque la température_ du liquide de refroidissement atteint une température consigne standard de 110°C. Ce thermostat (3) comporte un moyen de chauffage (31), de type résistance (31), qui va permettre d'augmenter artificiellement la température de la cire et ainsi de changer sa température consigne. C'est-à-dire que le thermostat (3) qui normalement provoque une ouverture du clapet (32) lorsque le liquide de refroidissement est à 110°C, va maintenant s'ouvrir lorsque le liquide de refroidissement est à 90°C, grâce à la résistance (31) qui va amener artificiellement le thermostat à 110°C. Le but de cette résistance (31) est de permettre de modifier la température de consigne selon un profil de consigne déterminé pour contrôler l'ouverture ou la fermeture du système de vannage (3). Cette résistance (31) est reliée au calculateur (4) du véhicule qui réalise les commandes nécessaires au procédé.

Le circuit de refroidissement comporte aussi au moins un capteur (101) de température disposé dans la conduite (11) du circuit de refroidissement en sortie du moteur (1) et en amont du système de vannage (3). Un deuxième capteur (102) peut être disposé dans la conduite (11) du circuit de refroidissement en aval du système de vannage (3) et en entrée du radiateur (2). Ces deux capteurs de température sont eux aussi reliés au calculateur (4). Le premier capteur (101) permet de mesurer la température (T1) du liquide de refroidissement en sortie du moteur. Le deuxième capteur (102) permet de mesurer la température du liquide de refroidissement en entrée du radiateur (2). Pour des raisons de coût élevé les véhiculés automobiles classiques ne sont pas équipés avec ce deuxième capteur (102) qui n'est utilisé que lors de test moteur. L'ensemble des mesures nécessaires pour réguler la température du moteur lors du fonctionnement d'un véhicule automobile sont donc effectuées avec le premier capteur (101) de température.

Le dispositif comporte aussi un module de contrôle (45) permettant de déterminer si la première ouverture du système de vannage a eu lieu car il n'est utilisé qu'après cette première ouverture. En effet, lors de la première ouverture du système de vannage la différence de température entre la température du moteur et la température de consigne est trop importante pour utiliser une consigne progressive.

La première ouverture qui a lieu lors du démarrage peut être réalisée en utilisant des moyens qui vont permettre d'éviter que le choc thermique ne soit trop important. Pour cela la première ouverture du système de vannage, dont la consigne standard est de 110°C, va être anticipée. C'est-à-dire que le dispositif dispose de moyens permettant au système de vannage d'être ouvert lorsque la température du liquide de refroidissement est à 90°C au lieu de 110°C. Cela est réalisé en utilisant la résistance chauffante (31) du thermostat. Lorsque l'ouverture est réalisée, le module de contrôle (45) prend une valeur (TC) indiquant que la première ouverture a eu lieu. C'est ce module de contrôle (45) qui est utilisé comme moyen de contrôle de la première ouverture dans le dispositif de régulation selon l'invention.

Le premier capteur (101) est donc utilisé pour mesurer la température (T1) du liquide de refroidissement en sortie du moteur en continu pendant le roulage afin de contrôler la température du moteur et vérifier que la température de consigne est atteinte.

Pour cela le dispositif comporte au moins un premier module (41) de calcul calibré par identification sur véhicule ou banc moteur permettant de déterminer des températures bornes minimum (B1) et maximum (B2) en fonction des températures consignes minimum (C1) et maximum (C2) mémorisées dans des moyens de mémorisation (47) situés dans le calculateur (4). Ces températures bornes minimum (B1) et maximum (B2) sont situées dans l'intervalle formé par les températures consignes minimum (C1) et maximum (C2). C'est-à-dire que le premier module (41) de calcul détermine une valeur de température borne minimum (B1) supérieure à la température consigne minimum (C1) et une valeur de température borne maximum (B2) inférieure à la température consigne maximum(C2). Par exemple si la température consigne minimum (C1) est égale à 90°C et si la température consigne maximum (C2) est égale à 110°C, la température borne minimum (B1) pourra être égale à 92°C et la température borne maximum (B2) pourra être égale à 108°C. Cette différence de température joue le rôle de marge de sécurité.

Le dispositif comporte un deuxième module (42) de calcul calibré par identification sur véhicule ou banc moteur permettant de déterminer le profil de température consigne. Pour cela ce module va calculer plusieurs températures intermédiaires (I1) entre la température borne minimum (B1) et la température borne maximum (B2). Ces températures intermédiaires (11) servent à atteindre la température de consigne minimum (C1) ou maximum (C2) progressivement.

Dans une variante le profil est pré-mémorisé dans le calculateur (4).

Le dispositif comporte aussi un module de comparaison (43) permettant de comparer la température mesurée (T1) en continu en sortie du moteur par le capteur (101) de température pendant le roulage avec les températures intermédiaires (I1) calculées avec le deuxième module (42) de calcul. Cette comparaison permet de déterminer un écart (E) entre les deux températures. Cet écart (E) est transmis à un module de correction (44) d'écart permettant de définir l'ouverture plus ou moins grande nécessaire du système de vannage pour atteindre la température consigne désirée en fonction de l'écart (E) mesurer.

Ce module de correction (44) du calculateur est en relation avec un module de commande (46) du thermostat afin de commander la mise en marche de la résistance chauffante.

Dans une variante du dispositif les modules de calcul et de correction pourront être associés à un régulateur de type PID (Proportionnel, Intégrale, Dérivée). Ce régulateur agit sur une valeur de régulation, dans le cas présenté ici, la valeur de régulation est la température, pour par exemple commander une résistance chauffante, une vanne, un robinet, etc.

Ce type de régulateur associe trois actions :
- Une action proportionnelle (P) : la valeur de sortie du régulateur est directement proportionnelle à l'écart entre la valeur mesurée et la valeur de consigne. Avec ce type de régulation, la valeur mesurée n'atteint jamais la valeur de la consigne : le rôle du régulateur est de minimiser cet écart.
- Une action intégrale (I) : l'action intégrale permet d'annuler l'écart entre la mesure et la consigne et donc d'améliorer la précision de la régulation. Elle consiste à réaliser une intégration (au sens mathématique du terme) de l'écart. Cette action intégrale est pratiquement toujours associée à une action proportionnelle.
- Une action dérivée (D): celle-ci consiste à dériver (au sens mathématique du terme) l'écart entre la mesure et la consigne. L'action dérivée permet de raccourcir le temps de réponse de la régulation et de stabiliser la régulation (lorsque les variations des valeurs contrôlées sont rapides). L'action dérivée est complémentaire de l'action proportionnelle.

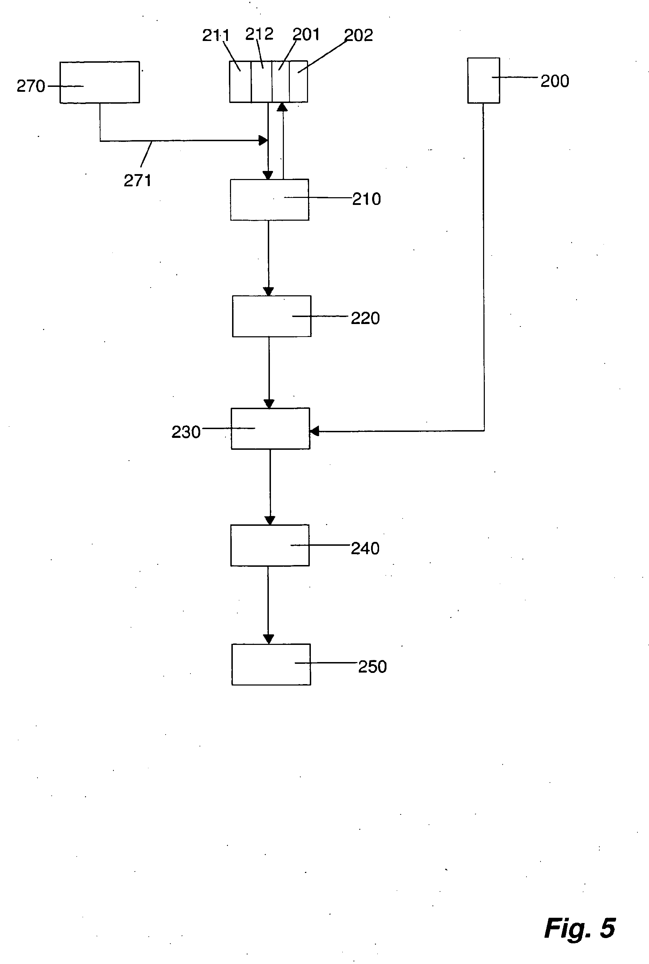

Le fonctionnement de ce dispositif, illustré sur la figure 5, va maintenant être décrit en détail.

Avant la mise en oeuvre de la régulation du moteur, les températures consignes minimum et maximum sont déterminées et mémorisées (201, 202) dans le module de mémorisation (47) du calculateur (4).

Pendant le roulage, la température (T1) du liquide de refroidissement en sortie du moteur est mesurée en continu (200) par le capteur (101) de température. Cette température (T1) est envoyée au calculateur (4).

Si le module de contrôle (45) a une température (TC) indiquant que la première ouverture a eu lieu, la régulation de température du moteur selon l'invention est enclenchée.

Le calculateur (4) grâce à un premier module (41) de calcul va utiliser les températures consignes minimum (C1) et maximum (C2) pour déterminer (210) les températures bornes minimum (B1) et maximum (B2). En général ces températures consignes minimum (C1) et maximum (C2) sont respectivement égales à 90°C et 110°C et les températures bornes minimum (B1) et maximum (B2) déterminées par le premier module (41) de calcul peuvent alors être respectivement égales à 92°C et 102°C.

Ces valeurs de températures bornes (C1, C2) sont mémorisées (211, 212) dans le module de mémorisation (47) du calculateur (4).

Le deuxième module (42) du calculateur (4) va ensuite calculer (220) des températures consignes intermédiaires (I1) du profil de température déterminé à partir des températures bornes minimum (B1) et maximum (B2) de façon a atteindre la température consigne (C1, C2) progressivement.

La température (T1) en sortie moteur mesurée en continu (200) est comparée (230) avec les différentes températures intermédiaires (I1) afin de déterminer un écart (E) grâce au module de comparaison (43). Les valeurs des écarts (E) sont envoyées au fur et à mesure à un module de correction (44) de l'écart qui va permettre de déterminer (240) l'ouverture plus ou moins grande ou la fermeture (250) du système de vannage nécessaire pour corriger l'écart (E) et ainsi atteindre la valeur consigne désirée en suivant le profil de consigne.

La correction s'effectue en commandant grâce au module de commande (46) la résistance (31) chauffante de façon à la faire chauffer ou non. Lorsque la résistance (31) chauffe le système de vannage est ouvert progressivement et lorsque la résistance (31) refroidit le système de vannage est fermé progressivement.

Le fonctionnement du dispositif selon l'invention comporte ainsi les étapes suivantes :
- détermination d'une valeur de température consigne minimum (C1) et d'une température consigne maximum (C2) et mémorisation (201, 202) de ces deux températures consignes dans des moyens de mémorisation (47) d'un calculateur (4),
- détermination (210) par un premier module de (41) calcul d'une valeur de température borne minimum (B1) à partir de la température consigne minimum (C1) et d'une valeur de température borne maximum (B2) à partir de la température consigne maximum (C2) et mémorisation (211, 212) de ces deux températures consignes dans des moyens de mémorisation (47) d'un calculateur (4),
- détermination (220) par un deuxième module (42) de calcul de températures intermédiaires (I1) en fonction des températures bornes minimum (B1) et maximum (B2),
- mesure (200) en continu pendant tout le temps de roulage de la température (T1) du liquide de refroidissement contenu dans le circuit en sortie du moteur (1) et en aval du système de vannage (3) avec un capteur (101),
- comparaison (230) de la température en sortie moteur avec les différentes températures intermédiaires (I1) afin de déterminer un écart (E),
- correction (240) de l'écart (E) de température par ouverture ou fermeture (250) du système de vannage.

Dans le cas présenté ici, le système de vannage (3) est du type thermostat, mais il est possible d'utiliser un autre système de vannage du liquide de refroidissement comme par exemple une vanne commandée électriquement et donc de réguler sur d'autres critères supplémentaires que la température.

De la même façon l'exemple de la protection radiateur a été décrite. Mais tout autre échangeur thermique aurait put être pris pour exemple, ou même des composants n'intervenant pas dans la thermique moteur mais ne devant pas subir un certain niveau de choc thermique.

Toujours dans ce sens, ce mode de protection peut être appliqué à d'autres types de moteurs comportant des composants annexes qui peuvent bénéficier d'une protection thermique: moteur électriques ou systèmes hybrides par exemple.

Encore, dans l'exemple cité, une température haute et une température basse ont été choisies par divers compromis. Selon l'évolution des conditions, d'autres valeurs peuvent être retenues (plus basses ou plus hautes).

Il doit être évident pour l'homme du métier que la présente invention permet des modes de réalisation sous de nombreuses autres formes spécifiques sans l'éloigner du domaine d'application de l'invention comme revendiquée. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Dispositif de régulation de la température moteur, le dispositif comportant un système de vannage (3) disposé sur une conduite (11) d'un circuit de refroidissement d'un moteur (1) à combustion interne reliant le moteur (1) à un radiateur (2), la conduite (11) comportant un capteur (101) de température disposé en sortie du moteur (1) et en amont du système de vannage (3) dont l'ouverture est activée automatiquement sous l'effet d'un réchauffement du liquide de refroidissement à une température consigne **caractérisé en ce qu'**il comporte des moyens (31) permettant de faire varier la température consigne selon un profil de consigne déterminé, compris entre une valeur consigne de température mémorisée minimum (C1) et une valeur consigne de température mémorisée maximum (C2), afin que la température du moteur atteigne progressivement la valeur de consigne minimum ou maximum pour atténuer le choc thermique par le maintient d'une ouverture plus ou moins grande du système de vannage, et des moyens de contrôle (45 ,TC) de première ouverture du système de vannage permettant de contrôler que la première ouverture du système de vannage a déjà eu lieu.

2. Dispositif de régulation de la température moteur selon la revendication 1 **caractérisé en ce que** les moyens permettant de commander une ouverture plus ou moins grande du système de vannage suivant le profil de consigne déterminé, sont constitués d'une résistance (31) chauffante utilisée pour augmenter ou diminuer prématurément la température d'une capsule de cire du système de vannage (3), provoquant respectivement l'ouverture ou la fermeture d'un clapet (32) et sont contrôlés par des moyens de calcul disposés dans le calculateur (4).

3. Dispositif de régulation de la température moteur selon la revendication 2 **caractérisé en ce que** les moyens de calcul disposés dans le calculateur (4) sont constitués par au moins un premier module (41) de calcul permettant de déterminer des températures bornes minimum (B1) et maximum inférieures (B2) en fonction réciproquement des températures consignes minimum (C1) et maximum (C2) mémorisées dans des moyens de mémorisation (47) situés dans le calculateur (4), un deuxième module (42) de calcul permettant de calculer plusieurs températures intermédiaires (I1) du profil de consigne entre la température borne minimum (B1) et la température borne maximum (B2), un module de comparaison (43) permettant de comparer la température mesurée (T1) en continu en sortie du moteur par le capteur (101) de température pendant le roulage avec les températures intermédiaires (I1) calculées avec le deuxième module (42) de calcul afin de déterminer l'écart (E) entre les deux températures (T1, I1) et un module de correction (44) de l'écart permettant de définir l'ouverture nécessaire du thermostat pour atteindre la température consigne désirée en fonction de l'écart (E) mesuré.

4. Dispositif de régulation de la température moteur selon la revendication 3 **caractérisé en ce que** les moyens de calcul disposés dans le calculateur (4) comprennent un module de commande (46) du thermostat en relation avec le module de correction (44)

5. Procédé de régulation de la température moteur mettant en oeuvre le dispositif selon la revendication 1 **caractérisé en ce qu'**il consiste à faire varier la température consigne afin que la température du moteur atteigne progressivement une valeur maximum de température lorsque la première ouverture du système de vannage a déjà eu lieu.

6. Procédé de régulation de la température moteur selon la revendication 5 **caractérisé en ce qu'**il comporte les étapes suivantes :
- détermination d'une valeur de température consigne minimum (C1) et d'une température consigne maximum (C2) et mémorisation (201, 202) de ces deux températures consignes dans des moyens de mémorisation (47) d'un calculateur (4),
- détermination (210) par un premier module (41) de calcul d'une valeur de température borne minimum (B1) à partir de la température consigne minimum (C1) et d'une valeur de température borne maximum (B2) à partir de la température consigne maximum (C2) et mémorisation (211, 212) de ces deux températures consignes dans des moyens de mémorisation (47) d'un calculateur (4),
- détermination (220) par un deuxième module (42) de calcul de températures intermédiaires (I1) en fonction des températures bornes minimum (B1) et maximum (B2),
- mesure (200) en continu pendant tout le temps de roulage de la température (T1) du liquide de refroidissement contenu dans le circuit en sortie du moteur (1) et en amont du système de vannage (3) avec un capteur (101),
- comparaison (230) de la température (T1) en sortie moteur avec les différentes températures intermédiaires (I1) afin de déterminer un écart (E),
- correction (240) de l'écart (E) de température par ouverture ou fermeture du système (250) de vannage.

7. Procédé de régulation de la température moteur selon la revendication 6 **caractérisé en ce que** la valeur de la température consigne minimum (C1) est comprise entre 80°C et 85°C et la température consigne maximum (C2) est comprise entre 100°C et 120°C.

8. Procédé de régulation de la température moteur selon la revendication 7 **caractérisé en ce que** la température consigne minimum (C1) est égale à 90°C et la température consigne maximum (C2) est égale à 110°C.

9. Procédé de régulation de la température moteur selon la revendication 8 **caractérisé en ce que** la température borne minimum (B1) est égale à 92°C lorsque la température consigne minimum (C1) est égale à 90°C et la température borne maximum (B2) est égale à 108°C lorsque la température consigne maximum (C2) est égale à 110°C.

10. Procédé de régulation de la température moteur selon la revendication 6 **caractérisé en ce que** l'ouverture et la fermeture (250) du système de vannage (3) sont réalisées en commandant la mise en marche d'un moyen de chauffage (31) situé au niveau du système de vannage (3) qui va faire atteindre précocement la température consigne (C1, C2) permettant l'ouverture ou la fermeture (250) du système de vannage.

## Claims

1. Device for regulating engine temperature, the device comprising a valve control system (3) placed on a line (11) of a cooling circuit of an internal combustion engine (1) connecting the engine (1) to a radiator (2), the line (11) comprising a temperature sensor (101) placed at the outlet of the engine (1) and upstream of the valve control system (3), which is automatically opened under the effect of a coolant being heated to a temperature setpoint, **characterized in that** it comprises means (31) for varying the temperature setpoint in accordance with a predefined setpoint profile, ranging between a minimum stored temperature setpoint (C1) and a maximum stored temperature setpoint (C2), so that the temperature of the engine gradually reaches the minimum or maximum setpoint to attenuate the thermal shock by maintaining the control valve system more or less wide open, and means (45, TC) for controlling the first opening of the control valve system and for checking that the first opening of the control valve system has already taken place.

2. Device for regulating engine temperature according to Claim 1, **characterized in that** the means for effecting a more or less wide opening of the valve control system in accordance with the predefined setpoint profile, consists of a heating resistor (31) used to prematurely increase or decrease the temperature of a wax plug of the valve control system (3), respectively causing the opening or the closing of a check valve (32), and are controlled by computation means placed in a computer (4).

3. Device for regulating engine temperature according to Claim 2, **characterized in that** the computation means placed in the computer (4) consists of at least one first computation module (41) for determining the lowest minimum (B1) and maximum (B2) temperature limits in accordance mutually with the minimum (C1) and maximum (C2) temperature setpoints stored in storage means (47) in the computer (4), a second computation module (42) for calculating several intermediate temperatures (I1) of the setpoint profile between the minimum temperature limit (B1) and the maximum temperature limit (B2), a comparison module (43) for comparing the temperature (T1) measured continuously at the engine outlet by the temperature sensor (101) during the driving, with the intermediate temperatures (I1) calculated with the second computation module (42) in order to determine the difference (E) between the two temperatures (T1, I1), and a module (44) for correcting the difference and serving to define the necessary opening of the thermostat to reach the desired temperature setpoint according to the measured difference (E).

4. Device for regulating engine temperature according to Claim 3, **characterized in that** the computation is placed in the computer (4) comprise a thermostat control module (46) associated with the correction module (44).

5. Method for regulating engine temperature implementing the device according to Claim 1, **characterized in that** it consists in varying the temperature setpoint so that the engine temperature gradually reaches a maximum temperature when the first opening of the valve control system has already taken place.

6. Method for regulating engine temperature according to Claim 5, **characterized in that** it comprises the hollowing steps:
- determination of a minimum temperature setpoint (C1) and a maximum temperature setpoint (C2) and storage (201, 202) of these two temperature setpoints in storage means (47) of a computer (4),
- determination (210) by a first computation module (41) of a minimum temperature limit (B1) from the minimum temperature setpoint (C1) and a maximum temperature limit (B2) from the maximum temperature setpoint (C2) and storage (212, 212) of these two temperature setpoints in storage means (47) of a computer (4).
- determination (220) by a second computation module (42) of intermediate temperatures (I1) as a function of the minimum (B1) and maximum (B2) temperature limits,
- measurement (200) continuously during the driving time, of the temperature (T1) of the coolant contained in the circuit at the outlet of the engine (1) and upstream of the valve control system (3) with a sensor (101),
- comparison (230) of the temperature (T1) at the engine of the various intermediate temperatures (I1) in order to determine a difference (E),
- correction (240) of the difference (E) in temperature by opening or closing the valve control system (250).

7. Method for regulating engine temperature according to Claim 6, **characterized in that** the minimum temperature setpoint (C1) is between 80°C and 85°C and the maximum temperature setpoint (C2) is between 100°C and 120°C.

8. Method for regulating engine temperature according to Claim 7, **characterized in that** the minimum temperature setpoint (C1) is 90°C and the maximum temperature setpoint (C2) is 110°C.

9. Method for regulating engine temperature according to Claim 8, **characterized in that** the minimum temperature limit (B1) is 92°C when the minimum temperature setpoint (C1) is 90°C, and the maximum temperature limit (B2) is 108°C when the maximum temperature setpoint (C2) is 110°C.

10. Method for regulating engine temperature according to Claim 6, **characterized in that** the opening and closing (250) of the valve control system (3) are carried out by turning on heating means (31) located in the valve control system (3) which prematurely reaches the temperature setpoint (C1, C2) allowing the opening or closing (250) of the valve control system.

## Patentansprüche

1. Vorrichtung zur Regelung der Motortemperatur, wobei die Vorrichtung ein Ventilsystem (3) aufweist, das auf einer Leitung (11) eines Kühlkreises eines Verbrennungsmotors (1) angeordnet ist, die den Motor (1) mit einem Kühler (2) verbindet, wobei die Leitung (11) einen Temperaturfühler (101) aufweist, der am Ausgang des Motors (1) und vor dem Ventilsystem (3) angeordnet ist, dessen Öffnung automatisch unter der Wirkung einer Erwärmung des Kühlmittels auf eine Solltemperatur aktiviert wird, **dadurch gekennzeichnet, dass** sie Einrichtungen (31), die es ermöglichen, die Solltemperatur gemäß einem bestimmten Sollprofil zu variieren, das zwischen einem minimalen gespeicherten Temperatursollwert (C1) und einem maximalen gespeicherten Temperatursollwert (C2) liegt, damit die Temperatur des Motors progressiv den minimalen oder maximalen Sollwert erreicht, um den Thermoschock durch die Aufrechterhaltung einer mehr oder weniger großen Öffnung des Ventilsystems zu dämpfen, und Überwachungseinrichtungen (45, TC) der ersten Öffnung des Ventilsystems aufweist, die es ermöglichen zu überwachen, dass die erste Öffnung des Ventilsystems bereits stattgefunden hat.

2. Vorrichtung zur Regelung der Motortemperatur nach Anspruch 1, **dadurch gekennzeichnet, dass** die Einrichtungen, die es ermöglichen, eine mehr oder weniger große Öffnung des Ventilsystems gemäß dem bestimmten Sollprofil zu steuern, aus einem Heizwiderstand (31) bestehen, der verwendet wird, um die Temperatur einer Wachskapsel des Ventilsystem (3) vorzeitig zu erhöhen oder zu senken, was das Öffnen bzw. das Schließen einer Ventilklappe (32) bewirkt, und von im Rechner (4) angeordneten Recheneinrichtungen überwacht werden.

3. Vorrichtung zur Regelung der Motortemperatur nach Anspruch 2, **dadurch gekennzeichnet, dass** die im Rechner (4) angeordneten Recheneinrichtungen aus mindestens einem ersten Rechenmodul (41), das es ermöglicht, minimale (B1) und maximale (B2) untere Grenztemperaturen abhängig wechselweise von den minimalen (C1) und maximalen (C2) Solltemperaturen zu bestimmen, die in im Rechner (4) befindlichen Speichereinrichtungen (47) gespeichert sind, einem zweiten Rechenmodul (42), das es ermöglicht, mehrere Zwischentemperaturen (I1) des Sollprofils zwischen der minimalen Grenztemperatur (B1) und der maximalen Grenztemperatur (B2) zu berechnen, einem Vergleichsmodul (43), das es ermöglicht, die während der Fahrt fortlaufend am Ausgang des Motors vom Temperaturfühler (101) gemessene Temperatur (T1) mit den mit dem zweiten Rechenmodul (42) berechneten Zwischentemperaturen (I1) zu vergleichen, um die Abweichung (E) zwischen den zwei Temperaturen (T1, I1) zu bestimmen, und einem Korrekturmodul (44) der Abweichung bestehen, das es ermöglicht, die notwendige Öffnung des Thermostats zu bestimmen, um die gewünschte Solltemperatur abhängig von der gemessenen Abweichung (E) zu erreichen.

4. Vorrichtung zur Regelung der Motortemperatur nach Anspruch 3, **dadurch gekennzeichnet, dass** die im Rechner (4) angeordneten Recheneinrichtungen ein Steuermodul (46) des Thermostats in Verbindung mit dem Korrekturmodul (44) enthalten.

5. Verfahren zur Regelung der Motortemperatur, das die Vorrichtung nach Anspruch 1 verwendet, **dadurch gekennzeichnet, dass** es darin besteht, die Solltemperatur zu variieren, damit die Temperatur des Motors progressiv einen maximalen Temperaturwert erreicht, wenn die erste Öffnung des Ventilsystems bereits stattgefunden hat.

6. Verfahren zur Regelung der Motortemperatur nach Anspruch 5, **dadurch gekennzeichnet, dass** es die folgenden Schritte aufweist:
- Bestimmung eines Werts einer minimalen Solltemperatur (C1) und einer maximalen Solltemperatur (C2) und Speicherung (201, 202) dieser zwei Solltemperaturen in Speichereinrichtungen (47) eines Rechners (4),
- Bestimmung (210) durch ein erstes Rechenmodul (41) eines minimalen Grenztemperaturwerts (B1) ausgehend von der minimalen Solltemperatur (C1) und eines maximalen Grenztemperaturwerts (B2) ausgehend von der maximalen Solltemperatur (C2), und Speicherung (211, 212) dieser zwei Solltemperaturen in Speichereinrichtungen (47) eines Rechners (4),
- Bestimmung (220) durch ein zweites Rechenmodul (42) von Zwischentemperaturen (I1) abhängig von den minimalen (B1) und maximalen (B2) Grenztemperaturen,
- fortlaufende Messung (200) während der ganzen Fahrzeit der Temperatur (T1) des Kühlmittels, das im Ausgangskreis des Motors (1) und vor dem Ventilsystem (3) enthalten ist, mit einem Sensor (101),
- Vergleich (230) der Temperatur (T1) am Motorausgang mit den verschiedenen Zwischentemperaturen (I1), um eine Abweichung (E) zu bestimmen,
- Korrektur (240) der Temperaturabweichung (E) durch Öffnen oder Schließen des Ventilsystems (250).

7. Verfahren zur Regelung der Motortemperatur nach Anspruch 6, **dadurch gekennzeichnet, dass** der Wert der minimalen Solltemperatur (C1) zwischen 80°C und 85°C und die maximale Solltemperatur (C2) zwischen 100°C und 120°C liegt.

8. Verfahren zur Regelung der Motortemperatur nach Anspruch 7, **dadurch gekennzeichnet, dass** die minimale Solltemperatur (C1) gleich 90°C und die maximale Solltemperatur (C2) gleich 110°C ist.

9. Verfahren zur Regelung der Motortemperatur nach Anspruch 8, **dadurch gekennzeichnet, dass** die minimale Grenztemperatur (B1) gleich 92°C ist, wenn die minimale Solltemperatur (C1) gleich 90°C ist, und die maximale Grenztemperatur (B2) gleich 108°C ist, wenn die maximale Solltemperatur (C2) gleich 110°C ist.

10. Verfahren zur Regelung der Motortemperatur nach Anspruch 6, **dadurch gekennzeichnet, dass** das Öffnen und Schließen (250) des Ventilsystems (3) durch Steuern des Starts einer im Bereich des Ventilsystems (3) befindlichen Heizeinrichtung (31) durchgeführt werden, die die Solltemperatur (C1, C2) vorzeitig erreichen lässt, die das Öffnen oder Schließen (250) des Ventilsystems ermöglicht.
